# EUROPÄISCHE PATENTSCHRIFT

(11) **EP 4 412 882 B1**
(45) Veröffentlichungstag und Bekanntmachung des Hinweises auf die Patenterteilung: **05.11.2025**
(21) Anmeldenummer: 22797274.2
(22) Anmeldetag: 21.09.2022
(51) Int. Cl.: B60W 30/18, B60W 60/00, B60W 50/00, G05D 1/00

(54) **VERFAHREN ZUR PLANUNG EINER TRAJEKTORIE EINES FAHRMANÖVERS EINES KRAFTFAHRZEUGS, COMPUTERPROGRAMMPRODUKT, COMPUTERLESBARES SPEICHERMEDIUM SOWIE FAHRZEUG**
METHOD FOR PLANNING A TRAJECTORY OF A DRIVING MANEUVER OF A MOTOR VEHICLE, COMPUTER PROGRAM PRODUCT, COMPUTER-READABLE STORAGE MEDIUM, AND VEHICLE
PROCÉDÉ DE PLANIFICATION D'UNE TRAJECTOIRE D'UNE MANOEUVRE DE CONDUITE D'UN VÉHICULE MOTORISÉ, PRODUIT DE PROGRAMME INFORMATIQUE, SUPPORT DE STOCKAGE LISIBLE PAR ORDINATEUR, ET VÉHICULE

(30) Priorität: 04.10.2021 DE 102021211164
(43) Veröffentlichungstag der Anmeldung: 14.08.2024
(73) Patentinhaber: AUMOVIO Autonomous Mobility Germany GmbH, 85057 Ingolstadt (DE)
(72) Erfinder: ENGELHORN, Michael, 85057 Ingolstadt (DE); RIEDER, Maximilian, 85057 Ingolstadt (DE); EDLING, Frank, 85057 Ingolstadt (DE)
(74) Vertreter: Aumovio Corporation
(86) Internationale Anmeldenummer: PCT/DE2022/200221
(87) Internationale Veröffentlichungsnummer: WO 2023/057014

(56) Entgegenhaltungen:
- WO-A1-2021/115567
- LANDOLFI ENRICO ET AL: "Model-Based Design and Processor-In-the-Loop Validation of a Model Predictive Control for Coupled Longitudinal-Lateral Vehicle Dynamics of Connected and Automated Vehicles", 2021 29TH MEDITERRANEAN CONFERENCE ON CONTROL AND AUTOMATION (MED), IEEE, 22 June 2021 (2021-06-22), pages 699 - 705, XP033941810, DOI: 10.1109/MED51440.2021.9480227
- LUAN ZHONGKAI ET AL: "Trajectory Tracking Control of Autonomous Vehicle With Random Network Delay", IEEE TRANSACTIONS ON VEHICULAR TECHNOLOGY, IEEE, USA, vol. 69, no. 8, 17 May 2020 (2020-05-17), pages 8140 - 8150, XP011804327, ISSN: 0018-9545, [retrieved on 20200813], DOI: 10.1109/TVT.2020.2995408

## Beschreibung

Die Erfindung betrifft ein Verfahren zur Planung einer Trajektorie eines Fahrmanövers eines Kraftfahrzeugs, ein Computerprogrammprodukt, ein computerlesbares Speichermedium sowie ein Fahrzeug.

Die Trajektorienplanung ist einer der wichtigsten Schritte zur Automatisierung von Fahrzeugen. Selbst in einem strukturierten Kontext, wie dem Autobahnfahren, sind auftretende Szenarien komplex und die Aufgabe der Planung ist nicht trivial.

Die Lösung dieses Problems durch Modellierung in Form einer Optimierung führt zu einem nichtlinearen Problem. Daher ist speziell im Hinblick auf einen begrenzten Zeitrahmen, in dem ein insbesondere autonom fahrendes Kraftfahrzeug das Problem lösen muss, ein ressourceneffizienter Algorithmus erforderlich, um das Problem zuverlässig und in dem festen Zeitrahmen zu lösen.

Nichtlineare Allzwecklöser haben die Aufgabe, generische Probleme zu lösen. Der Modellierung durch kontinuierliche Funktionen und gemischte ganze Zahlen fehlt die Möglichkeit einer heuristischen Auswertung, die notwendig ist, um das Problem der Trajektorienplanung im Rahmen der Optimierung zu lösen.

Das Problem des Steckenbleibens in lokalen Minima bei diskreten Entscheidungen (gemischt-ganzzahligen Problemen) ist in der Literatur weithin beschrieben.

Dennoch sind die in der Literatur und im Stand der Technik beschriebenen und bekannten Methoden nachteilig. Es besteht insbesondere bei komplexen Fahrszenarien der Bedarf an einem integrierten Trajektorienplanungsalgorithmus, der das gesamte nichtlineare Problem in einer einzigen Stufe effizient löst.

Ferner erfolgt beispielsweise bei einem 2-stufigen Planungsansatz (1. Stufe: Primitives Sampling, 2. Stufe SQP-basiert) lediglich eine Anpassung der Randbedingungen nur zwischen den Planungsschleifen, nicht aber an jedem Betriebspunkt.

Des Weiteren betrachten bereits bekannte Verfahren nur die getrennte laterale und longitudinale Trajektorienplanung durch numerischen Optimierungsverfahren. Hierbei werden in einem anschließenden Schritt die beiden Teile der separaten Trajektorien zur autonomen Steuerung eines Fahrzeugs kombiniert, was einen erhöhten (Rechen-)Aufwand zur Folge hat.

Beispielsweise betrifft die WO 2021 115 567 A1 ein Verfahren, bei dem eine Trajektorie für ein erstes Fahrzeug mittels modelbasierter prädiktiver Regelung ermittelt wird. Dabei werden Trajektorie-Informationen über ein zweites Fahrzeug verwendet, welches im Vorausbereich des ersten Fahrzeugs fährt. Insbesondere werden Diskretisierungspunkte und Ankunftszeitpunkte der Fahrzeuge an den Diskretisierungspunkte genutzt, um eine Nebenbedingung für die modelbasierte prädiktive Regelung des ersten Fahrzeugs zu generieren.

LANDOLFI ENRICO ET AL. schlagen in "Model-Based Design and Processor-In-the-Loop Validation of a Model Predictive Control for Coupled Longitudinal-Lateral Vehicle Dynamics of Connected and Automated Vehicles" (2021 29TH MEDITERRANEAN CONFERENCE ON CONTROL AND AUTOMATION (MED), IEEE, 22. Juni 2021 (2021-06-22), Seiten 699-705, XP033941810, DOI: 10.1109/MED51440.2021.9480227) eine MPC-Strategie (Model Predictive Control) für vernetzte und automatisierte Fahrzeuge vor, die in der Lage ist, in intelligenten kooperativen Fahrumgebungen zu arbeiten und fortschrittliche Fahrerassistenzsysteme auf SAE-Automatisierungsniveau L4 (High Automation) bereitzustellen.

Ferner beschreiben LUAN ZHONGKAI ET AL. in "Trajectory Tracking Control of Autonomous Vehicle With Random Network Delay" (IEEE TRANSACTIONS ON VEHICULAR TECHNOLOGY, IEEE, USA, Bd. 69, Nr. 8, 17. Mai 2020 (2020-05-17), Seiten 8140-8150, XP011804327, ISSN: 0018-9545, DOI: 10.1109/TVT.2020.2995408), dass eine zufällige Netzwerkverzögerung zu Unsicherheiten im Trajektorienverfolgungsmodell des autonomen Fahrzeugs führen kann, was die Stabilität des Steuerungssystems und die Genauigkeit der Trajektorienverfolgung des Fahrzeugs verschlechtert. Dabei wird die Robustheit und Stabilität des Trajektorienverfolgungssystems unter Berücksichtigung der durch zufällige Netzwerkverzögerung verursachten Lenkwinkeloszillation analysiert und ein lineares unsicheres Zeitverzögerungssystem beschrieben.

Ausgehend hiervon liegt der Erfindung die Aufgabe zugrunde, ein Verfahren, ein Computerprogrammprodukt, ein computerlesbares Speichermedium sowie ein Fahrzeug anzugeben, mit deren Hilfe die Planung einer Trajektorie gleichzeitig aufwandsärmer und optimierter erfolgt.

Erfindungsgemäß wird die Aufgabe hinsichtlich des Verfahrens durch den Gegenstand des Anspruchs 1 gelöst. Mit Blick auf das Computerprogrammprodukt wird die Aufgabe durch den Gegenstand des nebengeordneten Anspruchs 10, mit Blick auf das computerlesbare Speichermedium durch den Gegenstand des nebengeordneten Anspruchs 11 und mit Blick auf das Kraftfahrzeug durch den Gegenstand des nebengeordneten Anspruchs 12 gelöst.

Vorteilhafte Ausgestaltungen, Weiterbildungen und Varianten sind Gegenstand der Unteransprüche.

Die im Hinblick auf das Verfahren aufgeführten Vorteile und bevorzugten Ausgestaltungen sind sinngemäß auf das Computerprogrammprodukt, das computerlesbare Speichermedium sowie auf das Kraftfahrzeug zu übertragen und umgekehrt.

Konkret wird die auf das Verfahren gerichtete Aufgabe gelöst durch ein Verfahren zur Planung einer Trajektorie eines Fahrmanövers eines Kraftfahrzeugs. Bei dem Kraftfahrzeug handelt es sich insbesondere um ein autonom fahrendes Kraftfahrzeug mit einem autonomen Fahrprogramm.

Das Verfahren umfasst die Schritte:
1) Beurteilen einer aktuellen Fahrsituation;
2) Ermitteln eines angepassten Fahrmanövers in Form einer Trajektorie auf Basis der beurteilten Fahrsituation
3) Berechnen einer Anzahl von Arbeitspunkten der Trajektorie auf Basis der beurteilten Fahrsituation und des ermittelten Fahrmanövers;
4) Diskretisieren der aktuellen Umgebungsinformationen und/oder Fahrzeuginformationen an jedem der Arbeitspunkte der Trajektorie;
5) Auswählen und Integrieren relevanter Umgebungsdaten für jeden Arbeitspunkt auf Basis domainspezifischer Informationen;
6) Linearisieren der ausgewählten und integrierten Umgebungsdaten;
7) Heranziehen der linearisierten Umgebungsdaten für die Formulierung eines QP-Modells;
8) Lösen des QP-Modells mittels eines QP-Solvers;
9) Wiederholen der Schritte 1) bis 8) in Abhängigkeit einer Konvergenz der Lösung, wobei bei der Wiederholung der Schritte 1) bis 8) die Lösung des QP-Solvers berücksichtigt wird.

In dem ersten Schritt wird zunächst die eigene Fahrsituation des Kraftfahrzeugs beurteilt, indem beispielsweise das Umfeld des Kraftfahrzeuges auf weitere Verkehrsteilnehmer, auch als TPOs (Traffic Participant Object) bezeichnet, überprüft wird. Mit anderen Worten wird das aktuelle Verkehrsszenario um das Kraftfahrzeug herum festgestellt und beurteilt, beispielsweise hinsichtlich eines Abstandes zu einem vorausfahrenden TPO oder hinsichtlich eines neben dem Kraftfahrzeug fahrend TPO, das insbesondere bei einem gewünschten Spurwechsel von Bedeutung ist.

Ferner können im ersten Verfahrensschritt jedoch auch fahrzeugspezifische Parameter zur Beurteilung der aktuellen Fahrsituation beitragen. Derartige fahrzeugspezifische Parameter können beispielsweise ein eingestellter Fahrmodus (Economy oder Sport) oder eine Generalanweisung an das autonome Fahrprogramm sein, indem dieses eine vorzugsweise defensive und spritsparende oder im Gegenteil eine sportliche Fahrweise verfolgen soll.

Auf Basis der oben ermittelten und beurteilten aktuellen Fahrsituation wird dann ein angepasstes Fahrmanöver in Form einer Trajektorie ermittelt.

Anschließend werden eine Anzahl an Arbeitspunkten entlang der Trajektorie berechnet. Je nach zu planendem Fahrmanöver können hier 10 oder mehr Arbeitspunkte berechnet werden. Beispielsweise startet der erste Arbeitspunkt bei einem Spurwechsel-Manöver bei der aktuellen Position des Kraftfahrzeugs und der letzte Arbeitspunkt "liegt" auf der Spur, auf die das Kraftfahrzeug wechseln soll.

Im nächsten Schritt erfolgt ein Diskretisieren jedes Arbeitspunktes entlang der Trajektorie. Dies bedeutet, dass an jedem Arbeitspunkt die aktuelle Fahrsituation und vor allem die Umgebungsinformationen auf ihre Aktualität hin, also zum jeweiligen Zeitpunkt des Arbeitspunktes, ausgewertet werden. Sollte beispielsweise ein TPO nicht mehr im Umfeld des Kraftfahrzeugs sein, so wird dieser Umstand berücksichtigt und in die Trajektorienplanung einbezogen.

Anschließend erfolgt der eigentliche Kern des erfindungsgemäßen Verfahrens. Es werden folglich lediglich relevante Umgebungsdaten für jeden Arbeitspunkt auf Basis domainspezifischer Informationen ausgewählt und integriert. Unter dem Begriff "domainspezifische Informationen" können Informationen über das Kraftfahrzeug, das Umfeld des Kraftfahrzeuges und insbesondere über die aktuelle Fahrsituation verstanden werden, die bei der Trajektorienplanung helfen, die Konvexität, also die Lösbarkeit des Problems, zu verbessern oder gar herzustellen. Es kann hierbei beispielsweise auf bereits bekannte Verkehrsszenarien zurückgegriffen werden, um lediglich die relevanten Informationen zu berücksichtigen. Muss das Kraftfahrzeug beispielsweise lediglich einer Fahrspur folgen und eine derartige Trajektorie geplant werden, so können alle TPO, die die Fahrspur des Kraftfahrzeuges, also die Ego Lane, nicht betreffen vernachlässigt werden. Es gilt also vorranging das vorausfahrende Fahrzeug mit in die Planung einzubeziehen, um ein zu dichtes Auffahren zu verhindern. Eine derartige Information kann beispielsweise in Form der domainspezifischen Information in diesem Schritt bei der Trajektorienplanung mit einbezogen werden. Mit anderen Worten wird die Trajektorienplanung durch die zusätzlichen domainspezifischen Informationen unterstützt, sodass nicht benötigte Informationen gestrichen werden und somit das zu lösende Problem einfacher oder gar überhaupt erst lösbar wird.

Die bereits vorstehenden erwähnten ausgewählten und integrierten Umgebungsdaten werden in den nächsten Schritten für die Formulierung eines QP-Modells herangezogen. Hierzu werden die Umgebungsdaten und das Fahrzeugmodell zunächst linearisiert.

Das anschließende Lösen des QP-Modells erfolgt mittels eines QP-Solvers. Dies wird insbesondere dadurch ermöglicht, da das zu lösende Problem und die damit verbundene Kostenfunktion durch die Streichung nicht zu berücksichtigender Nebenbedingungen aufgrund der zusätzlichen domainspezifischen Informationen derart vereinfacht wurde, dass sie mit einem üblichen QP-Solver gelöst werden kann.

Im letzten Schritt des Verfahrens erfolgt eine Analyse der Lösung des Problems hinsichtlich einer Konvergenz. Mit anderen Worten erfolgt eine Analyse, ob sich bei einer erneuten Diskretisierung des Umfeldes eine ähnliche QP-Formulierung und damit eine ähnliche QP-Lösung ergibt. Es erfolgt also eine Konvergenzanalyse hinsichtlich der Problemformulierung und der Problemlösung. Die erhaltene Lösung stellt also die Lösung des nichtlinearen Optimierungsproblems dar, sofern sie sich innerhalb eines lokalen Bereichs der durchgeführten Approximationen liegt. Andernfalls muss die Sequenz mit einer aktualisierten Beurteilung der Fahrzeugbewegung wiederholt werden. Ziel der

Wiederholung ist es, Konvergenz der linearisierten und nichtlinearen Gleichungen zu erreichen.

Ist dies nicht der Fall, werden die vorhergehenden Schritte wiederholt. Es erfolgt somit also eine SQP basierte Trajektorienplanung.

Grundsätzlich haben nichtlineare Allzwecklöser die Aufgabe, generische Probleme zu lösen. Der hierzu notwendigen Modellierung durch kontinuierliche Funktionen und gemischte ganze Zahlen fehlt die Möglichkeit der heuristischen Auswertung, die notwendig ist, um das Problem der Trajektorienplanung im Rahmen der Optimierung zu lösen. Das Problem des Steckenbleibens in lokalen Minima bei diskreten Entscheidungen (gemischt-ganzzahlige Problemen) ist in der Literatur weithin beschrieben.

Diesem Problem wird durch das oben beschriebene Verfahren begegnet, indem die domainspezifischen Informationen, nachfolgend auch als domainspezifische Heuristiken bezeichnet, erfindungsgemäß in den SQP-Algorithmus implementiert werden. Unter dem Begriff "Heuristik" kann im Sinne dieser Anmeldung allgemein ein Wissen über Fahrfunktionen des Kraftfahrzeugs verstanden werden.

Dieser Ansatz führt zu einem speziellen SQP-basierten Löser für die Trajektorienplanung, indem er die genannten Heuristiken, also Wissen über Fahrfunktionen, im Rahmen einer eingebetteten Nutzung verwendet.

Zu diesem Zweck werden Heuristiken in den SQP-Algorithmus integriert, um das nicht-konvexe und nicht-lineare Problem der Trajektorienplanung in sequentielle, lokal genaue und konvexe quadratische Programme aufzuteilen, die von modernen QP-Lösern gelöst werden können.

Der Kern des erfindungsgemäßen Verfahrens ist somit ein SQP-basierter nichtlinearer Löser, der domainspezifische Heuristiken nutzt. Außerdem wird jeder Diskretisierungsschritt einzeln behandelt, um die am besten geeignete Diskretisierung auszuwählen, ohne die gesamte Trajektorie zu verallgemeinern.

Die Modellierung des Problems als lineares quadratisches Programm erfordert die Formulierung aller mathematischen Funktionen als lineare oder quadratische Gleichungen. Als Vorteil kann ein moderner QP-Löser verwendet werden, um das Optimierungsproblem schnell und zuverlässig sowie mit einfachen Mitteln zu lösen.

Das erfindungsgemäße Verfahren verwendet unter anderem die nachstehend in den Ausführungsformen beschriebenen Heuristiken sowie ein Modell der Fahrzeugdynamik um die Fahrzeugbewegung für einen bestimmten Zeithorizont zu schätzen. Im Einzelnen muss der Zeithorizont, für den die Trajektorie geplant werden soll, für eine bestimmte Anzahl von Einzelschritten diskretisiert werden. Die geschätzten Fahrzeugzustände für jeden Diskretisierungsschritt werden als Arbeitspunkte für die folgenden Näherungen verwendet. Für jeden Arbeitspunkt werden auch die statischen und dynamischen Umgebungsdaten, wie bereits beschrieben, einzeln diskretisiert. Dies erfolgt beispielsweise in einem zeitlichen Abstand von 50ms - 150ms, vorzugsweise alle 100ms.

Außerdem werden alle nichtlinearen Gleichungen an den geschätzten Betriebspunkten linearisiert. Mit den linearisierten Gleichungen und diskretisierten Umgebungsdaten kann das lineare Quadratische Programm somit aufgestellt und gelöst werden.

In einer Ausführungsform werden als domainspezifische Information eine oder mehrere der nachstehenden Heuristiken ausgewählt aus
- Bewertung der aktuellen Fahrsituation zur Erkennung geeigneter Manöver,
- Anpassung der Fahrzeugparameter auf Basis der bewerteten Fahrsituation;
- Auswahl oder Anpassung eines Fahrmodus und/oder eines Antriebsmodus des Kraftfahrzeugs;
herangezogen.

Unter dem Begriff der "Bewertung der aktuellen Fahrsituation" kann hierbei verstanden werden, dass beispielsweise überprüft wird, ob die aktuelle Fahrspur

des Kraftfahrzeugs (auch als Ego Lane bezeichnet) und/oder die angrenzenden Fahrspuren frei oder mit anderen TPOs belegt sind. Die erfolgt an jedem Arbeitspunkt. Ferner wird ebenfalls überprüft, ob eventuell ein Ausweichen im Sinne eines Fahrspurwechsels erforderlich ist oder wird. Ferner werden auch Szenenvariationen berücksichtigt, um die Möglichkeit einer sich ändernden Umgebung auszunutzen. Es wird somit zusammenfassend sowohl eine räumliche Komponente als auch die Dynamik des Kraftfahrzeugs in jedem Arbeitspunkt (räumlich und zeitlich betrachtet) überprüft und berücksichtigt.

Unter der Heuristik der Anpassung der Fahrzeugparameter auf Basis der bewerteten Fahrsituation kann im Sinne dieser Anmeldung verstanden werden, dass beispielsweise im Fall des vorstehend beschriebenen Ausweichmanövers kurzfristig Fahrbeschränkungen des Kraftfahrzeuges aufgehoben oder erhöht oder verringert werden. Unter dem Begriff "Fahrbeschränkungen" kann hierbei eine eingestellte oder vorgegebene maximale Geschwindigkeit oder ein vorgegebener oder eingestellter Abstand zum vorausfahrenden TPO verstanden werden. So kann es beispielweise für den erwähnten Spurwechsel notwendig sein, kurzfristig ein Geschwindigkeitslimit zu erhöhen bzw. zu überschreiten und/oder einen vorgegebenen Abstand zum vorderen TPO zu unterschreiten, damit in eine freie Lücke auf der Nebenfahrspur eingebogen werden kann.

In diesem Zusammenhang werden somit auch ein Fahrmodus und/oder ein Antriebsmodus des Kraftfahrzeuges bei der Planung der Trajektorie berücksichtigt und herangezogen.

Beispiele für Fahrmodi sind nachfolgend nicht abschließend aufgelistet:
- Economy (sehr sparsames Fahren)
- Comfort (normaler Fahrmodus)
- Sport (sportliches Fahren)

Beispiele für Antriebsmodi sind nachfolgend nicht abschließend aufgelistet:
- energieeffizient
- elektrisch
- nur mit Verbrennungsmotor
- spezifischer Modus, z.B. hohe Leistung für aktive Filterregeneration bei Fahrzeugen mit Verbrennungsmotor

In einer weiteren Ausführungsform werden die Fahrzeugparameter auf Basis eines Fahrzeugmodells, insbesondere auf Basis eines dynamischen Einspurmodells ermittelt. Hierbei werden insbesondere die mechanischen und physikalischen Parameter und Eigenschaften des Kraftfahrzeuges berücksichtigt. Dieser Ausführungsform liegt der Gedanke zugrunde, dass grundsätzlich die Trajektorie für das Kraftfahrzeug aus rein physikalischen und technischen Gründen "fahrbar sein muss". Aus diesem Grund wird mit dieser Ausführungsform eine weitere Genauigkeit und Optimierung der geplanten Trajektorie erreicht, da hierdurch physikalisch und/oder mechanisch nicht fahrbare Trajektorien für dieses Kraftfahrzeug nicht berücksichtigt werden. Das dynamische Einspurmodell basiert insbesondere darauf, die physikalischen und mechanischen Eigenschaften, wie beispielsweise Beschleunigungsvermögen, Kurveneigenschaften aufgrund des Radstandes oder Bremseigenschaften des Kraftfahrzeuges in Form von kinematischen Gleichungen anzugeben, die zur Berücksichtigung in das Verfahren implementiert werden.

Gemäß einer Ausführungsform wird zur Ermittlung der relevanten Umgebungsdaten die jeweilige Relevanz anderer Verkehrsteilnehmer für das Fahrmanöver in einer Längsrichtung basierend auf einer geschätzten Position des Kraftfahrzeugs herangezogen. Hierbei wird anhand der geschätzten Fahrzeugpositionen (Betriebspunkte) auf der Straße eine Vorauswahl getroffen, welche dynamischen Objekte in Längsrichtung berücksichtigt werden sollen. Auf diese Weise bleibt die Anzahl der benötigten Gleichungen für die Objektbetrachtungen konstant und reduziert die Duplizierung von Nebenbedingungen, die die Konvexität der der zugrundeliegenden QP negativ beeinflussen könnten.

In einer Weiterbildung wird zur Ermittlung der relevanten Umgebungsdaten die jeweilige Relevanz anderer Verkehrsteilnehmer für das Fahrmanöver in einer

Querrichtung basierend auf einer geschätzten Position des Kraftfahrzeugs herangezogen. Hierbei wird anhand der geschätzten Fahrzeugpositionen (Betriebspunkte) auf der Straße in einem Zeitschritt bewertet, welches dynamische Objekt relevant ist. Dabei skaliert der Ansatz von einfachen Überlegungen wie das Blockieren der Nachbarspur in diesem Zeitschritt bis hin zu fortgeschritteneren Geometrieüberlegungen.

Ferner wird gemäß einer Ausführungsform des Verfahrens auch ein für das Fahrmanöver verfügbarer Fahrbahnraum zur Ermittlung der relevanten Umgebungsdaten und somit zur Optimierung der Trajektorienplanung herangezogen. Hierdurch wird somit berücksichtigt, wenn der Fahrbahnraum beispielsweise durch Fahrbahnmarkierungen oder dynamische oder statische Objekte oder beliebige zeitunabhängige oder zeitabhängige Informationen (z.B. uhrzeitabhängige Durchfahrtsbeschränkung) begrenzt ist.

Um sich zwischen zwei Fahrzeugpositionen befindliche Objekte festzustellen, werden diese beiden Fahrzeugpositionen üblicherweise ausgewertet. Die Berücksichtigung solcher Objekte erfordert in der Regel eine Erhöhung der Abtastrate, was zu einer Änderung der Größe des zugrunde liegenden QP-Modells führt. Um dies zu entkoppeln umfasst das Verfahren in einer Ausführungsform die Schritte:
- Heranziehen von Heuristiken zu Erkennung zumindest eines Objektes zwischen zwei Arbeitspunkten; und
- Modellieren und Hinzufügen der erkannten zumindest einen Objekts zu dem formulierten QP-Modell.

Gemäß einer Ausführungsform werden fahrzeuginterne Entitäten und/oder fahrzeugexterne Entitäten für die Bereitstellung der aktuellen Fahrsituation und/oder der aktuellen Umgebungsinformationen herangezogen. Bei den fahrzeuginternen Entitäten kann es sich vorzugsweise, jedoch nicht abschließend, um Sensoreinheiten oder Sensorsystemen, wie z. B. im oder am Kraftfahrzeug angeordnete Kameras, Radarsensoren oder Lidar-Sensoren handeln. Allgemein können alle "informationsliefernden" Elemente und/oder Einheiten des Kraftfahrzeuges als fahrzeuginterne Entität im Sinne dieser Anmeldung angesehen werden. Somit zählt auch die fahrzeuginterne Navigationskarte zu den fahrzeuginternen Entitäten. Alternativ oder ergänzend können auch externe Entitäten für die Beurteilung der aktuellen Fahrsituation und/oder der aktuellen Umgebungsinformationen herangezogen werden. Unter dem Begriff "fahrzeugexterne Entitäten" können im Sinne dieser Anmeldung und im Gegensatz zu den vorstehend erwähnten fahrzeuginternen Entitäten alle Entitäten verstanden werden, die sich außerhalb des Kraftfahrzeugs befinden, jedoch eine Information über die aktuelle Fahrinformation und/oder Umgebung liefern können. Als Beispiel für eine derartige externe Entität kann ein sogenanntes "intelligentes Parkhaus" genannt werden. Derartige Parkhäuser weisen Kameras bzw. Kamerasysteme sowie diverse unterschiedliche Sensoren auf, mit deren Hilfe die aktuelle Position, Geschwindigkeit und/oder ein aktuelles Umfeld des Kraftfahrzeuges und/oder weiterer Verkehrsteilnehmer ermittelt werden kann. Diese Informationen werden dann dem Trajektorienplaner zur Verfügung gestellt. Unter dem Begriff "fahrzeugexterne Entitäten" können im Sinne dieser Anmeldung auch beispielsweise Informationen verstanden werden, die von anderen Verkehrsteilnehmer und/oder von Insassen des Kraftfahrzeugs (z.B. Positionssignal des Smartphones oder Kartendaten usw.) und/oder der umliegenden Infrastruktur (z.B. Überwachungskameras) bereitgestellt und übermittelt werden,

Ferner können alternativ oder ergänzend das elektronische Steuergerät des Kraftfahrzeugs sowie insbesondere in einem elektromotorisch angetriebenen Kraftfahrzeug der elektrische Antriebsstrang (z.B. das Antriebsstrangsteuergerät) herangezogen werden, um speziell aktuelle Fahrzeuginformationen bereitzustellen.

In einer Ausführungsform des Verfahrens umfasst die Planung der Trajektorie eine kombinierte Planung einer Longitudinal-Trajektorie und einer Lateral-Trajektorie. Diese Ausführungsform ermöglicht im Vergleich zu bekannten Verfahren ein kombiniertes Verfahren für Längs- und Querbahnen, bei dem eine Planung mit dem Ansatz der modellprädiktiven Planung durch Modellierung des komplexen nichtlinearen Problems des automatisierten Fahrens in ein punktdiskretisiertes QP-Problem modelliert wird, das ressourceneffizient durch einen üblichen QP-Löser gelöst wird.

Konkret wird die Aufgabe mit Blick auf das Computerprogrammprodukt gelöst durch ein Computerprogrammprodukt, umfassend Befehle, die bei der Ausführung des Programms durch einen Computer diesen veranlassen, das vorstehend beschriebene Verfahren auszuführen.

Konkret wird die Aufgabe mit Blick auf das computerlesbare Speichermedium gelöst durch ein computerlesbares Speichermedium, umfassend Befehle, die bei der Ausführung durch einen Computer diesen veranlassen, die Schritte des vorstehend beschriebenen Verfahrens auszuführen.

Konkret wird die Aufgabe mit Blick auf das Kraftfahrzeug gelöst durch ein Kraftfahrzeug, wobei das Fahrzeug Mittel zur Ausführung des vorstehend beschriebenen Verfahrens umfasst. Bei dem Kraftfahrzeug handelt es sich vorzugsweise um ein autonom fahrendes Kraftfahrzeug bzw. um ein Kraftfahrzeug, das zum autonomen Fahren ausgebildet ist.

Ein Ausführungsbeispiel der Erfindung wird nachfolgend anhand der Figuren näher erläutert. Diese zeigen in teilweise stark vereinfachter Darstellung:
- Fig. 1: ein skizziertes Blockschaltbild zur Darstellung eines grundsätzlichen Ablaufs einer Fahrmanöverplanung sowie -steuerung auf Basis der Planung;
- Fig. 2: ein vereinfachtes Blockschaltbild des erfindungsgemäßen Verfahrens;
- Fig. 3: ein skizziertes Szenario eines Fahrmanövers in Form eines Spurwechsels sowie
- Fig. 4: das skizzierte Szenario aus Fig. 3 mit dargestellten Arbeitspunkten.

In den Figuren sind gleichwirkende Bauteile stets mit den gleichen Bezugszeichen dargestellt.

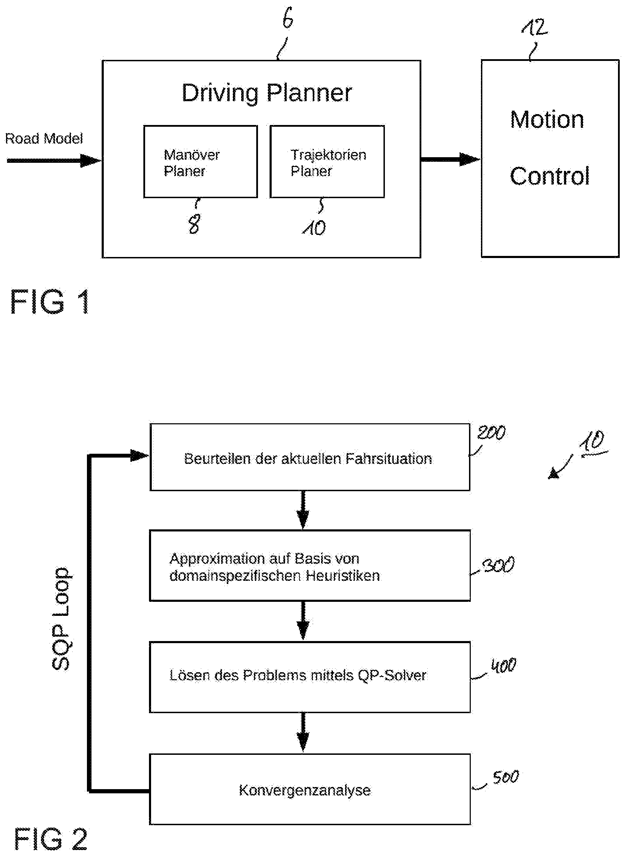

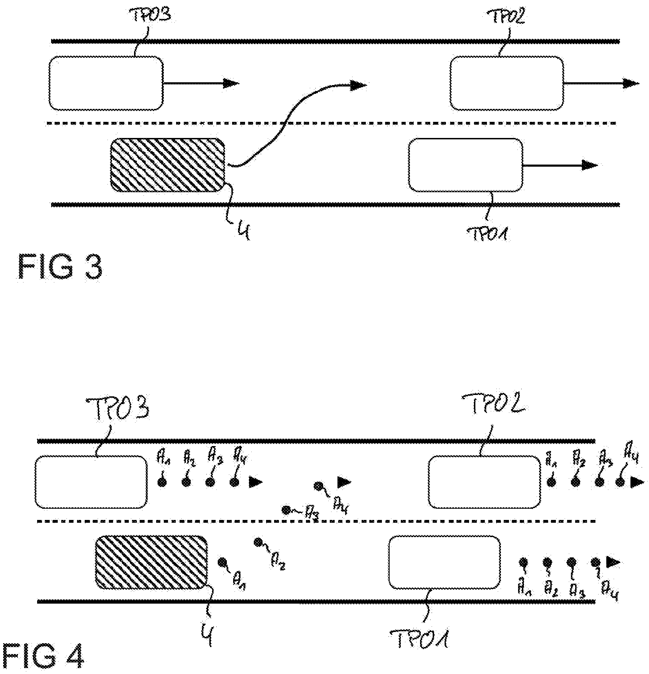

In Fig. 1 ist der grundsätzliche Ablauf einer Fahrmanöverplanung sowie - steuerung für ein Kraftfahrzeug 4 (vgl. Fig. 3+4) dargestellt. Hierbei wird auf eine detaillierte Darstellung und Beschreibung verzichtet. Die Fig. 1 dient dazu, die grundlegende Einordnung der Erfindung in dem Planungsablauf des zu planenden Fahrmanövers zu verdeutlichen.

Wie in Fig. 1 zu erkennen, ist ein Driving Planner 6 vorgesehen, der als Eingangssignal ein sogenanntes Road Model, welches zum Beispiel Informationen über einen Fahrbahnverlauf aufweist, erhält. Ergänzend kann zusätzlich eine Auflistung und damit eine Information über sich innerhalb eines Umfelds des Kraftfahrzeuges 4 befindlichen Objekten als Eingangssignal in den Driving Planner 6 eingespeist werden. Bei den Objekten kann es sich beispielsweise um andere Verkehrsteilnehmer oder um Fahrbahnbegrenzungen handeln.

Der Driving Planner 6 weist einen Manöver Planer 8 und einen Trajektorien Planer 10 auf. Der Manöver Planer 8 ist derart eingerichtet, auf Basis der Informationen des Eingangssignals zu beurteilen, ob ein Fahrmanöver notwendig ist und erstellt auf Basis seiner Beurteilung eine Manöveranforderung an den Trajektorien Planer 10. Unter dem Begriff "Fahrmanöver" können im Sinne dieser Anmeldung im Straßenverkehr übliche Manöver wie beispielsweise ein Ausweichen, ein Spurwechsel, oder eine Folgefahrt auf der eigenen Spur verstanden werden. Auch andere generell zum Vermeiden einer Kollision oder eines Unfalls erforderliche Fahrmanöver sind hiermit umfasst und denkbar.

Das angeforderte Fahrmanöver, beispielsweise ein Spurwechsel, wird dann als Eingangssignal an den Trajektorien Planer 10 übermittelt. Dort wird auf Basis der vorliegenden Informationen und weiterer Informationen, die nachfolgend noch detaillierter beschrieben werden, eine Trajektorie geplant, die das Kraftfahrzeug

"abfahren" soll, um das angeforderte Fahrmanöver auszuführen. Nach der erfolgten Planung der Trajektorie wird diese an das Motion Control Modul 12 übermittelt. Das Motion Control Modul 12 erteilt dann die für die Ausführung der Trajektorie notwendigen Steuerbefehle an die einzelnen Komponenten des Kraftfahrzeugs 4. Mit Bezug auf das erwähnte Beispiel des Spurwechsels erfolgt durch das Motion Control Modul 12 ein Lenkbefehl an die Lenkung sowie gegebenenfalls ein Befehl zum Beschleunigen oder Abbremsen des Kraftfahrzeuges 4, um den Spurwechsel durchzuführen.

Fig. 2 zeigt eine skizziertes Blockschaltbild des erfindungsgemäßen Verfahrens innerhalb des Trajektorien Planers 10.

Die Planung der Trajektorie erfolgt in einem ersten grundlegenden Schritt durch eine Beurteilung 200 der aktuellen Fahrsituation. Hierbei wird festgestellt, ob und wie viele andere Verkehrsteilnehmer sich im näheren Umfeld des Kraftfahrzeuges 4 aufhalten. Unter dem Begriff "näheres Umfeld" kann hierbei ein Umfeld des Kraftfahrzeuges verstanden werden, welches für das angeforderte Fahrmanöver relevant ist. Dies kann je nach angefordertem Fahrmanöver variieren. Im Fall des Beispiels des Spurwechsels begrenzt sich das nähere Umfeld des Kraftfahrzeuges auf die unmittelbar vor, hinter und neben dem Kraftfahrzeug befindlichen Verkehrsteilnehmer, also auf das unmittelbare Umfeld.

Ergänzend werden in diesem Verfahrensschritt jedoch auch Informationen über das Kraftfahrzeug zur Beurteilung herangezogen. So wird berücksichtigt, in welchem Fahrmodus sich das Kraftfahrzeug gerade befindet und auch, welche physikalischen und/oder mechanischen Grenzen des Kraftfahrzeuges, z.B: maximaler Lenkwinkel oder Beschleunigungsvermögen, bei der Planung der Trajektorie zu berücksichtigen sind.

Wurde die aktuelle Fahrsituation ausreichend beurteilt. Erfolgt in einem nächsten Schritt eine Approximation 300 auf Basis domainspezifischer Heuristiken und eine Formulierung eines zu lösenden Problems, welches der Planung der Trajektorie zu Grunde liegt. Hierbei erfolgt eine Aufteilung der zu planenden Trajektorie in eine Anzahl an Arbeitspunkten A₁-A₄ (vgl. Fig. 4). Hierbei wird an jedem Arbeitspunkt A₁-A₄ die Umgebungssituation (Wo befindet sich das Kraftfahrzeug gerade? - Wie verhalten sich die anderen Verkehrsteilnehmer im Vergleich zum vorherigen Arbeitspunkt?) beurteilt und die Formulierung des QP entsprechend angepasst.

Erfindungsgemäß erfolgt in diesem Schritt eine Reduzierung von nicht benötigten Umgebungsinformationen auf Basis der domainspezifischen Heuristiken. Hierbei wird auf domainspezifisches Wissen, z.B. Wissen über bestimmte Verkehrssituationen, in denen sich das Kraftfahrzeug bereits befand, zurückgegriffen. Hierdurch wird erreicht, dass sich das von dem Trajektorien Planer 10 zu lösende Problem vereinfacht. Mit erneutem Bezug auf das vorstehend erwähnte Beispiel des Spurwechsels kann eine Hinzuziehung der domainspezifischen Heuristiken bedeuten, dass der Trajektorien Planer 10 - solange sich das Kraftfahrzeug 4 noch auf seiner aktuellen Spur befindet - lediglich andere Verkehrsteilnehmer auf seiner Spur für die Planung der Trajektorie berücksichtigt. Sobald das Kraftfahrzeug 4 dann auf die benachbarte Spur gewechselt ist oder zumindest die Hälfte des Spurwechsels vollzogen hat, soll es nur noch die anderen Verkehrsteilnehmer auf der "neuen" Spur für die Trajektorienplanung berücksichtigen. Mit anderen Worten tragen die domainspezifischen Heuristiken somit erfindungsgemäß zur Vereinfachung des zu lösenden Problems bei.

Somit kann das auf Basis der domainspezifischen Heuristiken "vereinfachte" Problem in einem nächsten Verfahrensschritt 400 von einem QP-Solver gelöst werden.

Anschließend erfolgt in einem weiteren Schritt 500 eine Konvergenzanalyse. Hierbei wird überprüft, ob eine hinreichende Konvergenz des Problems erreicht wurde und somit die geplante Trajektorie ausreicht, um das angeforderte Fahrmanöver zu vollziehen. Ist dies der Fall, wird die geplante Trajektorie, wie bereits in den Ausführungen zu Fig. 1 erwähnt, als Eingangssignal an das Motion Control Modul 12 übermittelt. Wird jedoch eine noch nicht ausreichende

Konvergenz festgestellt, werden die Verfahrensschritte erneut in einer weiteren Sequenz durchgeführt, um eine genauere Konvergenz zu erzielen. Hierbei wird dann die zuvor erreichte Lösung sowie ergänzend auch weitere domainspezifische Heuristiken mit einbezogen.

Zusammenfassend bildet das erfindungsgemäße Verfahren somit eine Implementierung von domainspezifischen Heuristiken in ein SQP basiertes Problem, welches an jedem der erstellten Arbeitspunkte A₁-A₄ individuell evaluiert wird und mittels einem üblichen QP-Solver gelöst werden kann.

Das bereits vorstehend zur Erläuterung des Verfahrens herangezogene Beispiel des Spurwechsels wird nachfolgend in den Figuren 3 und 4 genauer erläutert.

In Fig. 3 ist ein Teilstück einer zweispurigen Fahrbahn gezeigt, auf dem sich das schraffiert dargestellte Kraftfahrzeug 4 in einer Fahrrichtung (in der Bildebene nach rechts) bewegt. Zusätzlich sind auf der Fahrbahn weitere Verkehrsteilnehmer TPO1, TPO2, TPO3, ..., TPOn dargestellt. Hierbei steht n für eine positive natürliche Zahl, die die offene aber maximale Anzahl der Verkehrsteilnehmer repräsentieren soll. Der Einfachheit und Überschaubarkeit halber beziehen sich die nachfolgenden Ausführungen immer auf lediglich drei weitere Verkehrsteilnehmer TPO1, TPO2, TPO3, was jedoch nicht als Einschränkung des erfindungsgemäßen Verfahrens zu verstehen ist.

Die Fahrtrichtungen der weiteren Verkehrsteilnehmer sind jeweils durch Pfeile dargestellt. In Fig. 4 ist das gleiche Szenario nochmals dargestellt. Allerdings sind in Fig. 4 die einzelnen Arbeitspunkte A₁-A₄ der approximierten Trajektorie dargestellt. Hierbei sind der Einfachheit halber lediglich vier Arbeitspunkte A₁-A₄ je Verkehrsteilnehmer dargestellt, die - von dem jeweiligen Objekt aus und in Pfeilrichtung betrachtet - je einen Arbeitspunkt A₁-A₄ mit entsprechenden Informationen über das Umfeld und/oder die Fahrsituation und/oder das Fahrzeug selbst an dem jeweiligen Arbeitspunkt A₁-A₄ repräsentieren. Hierbei zählen - wie bereits vorstehend detailliert erläutert - beispielsweise jedoch nicht abschließend auch eine Geschwindigkeit und/oder eine Beschleunigung und/oder auch sogenannte Meta-Informationen über das Fahrzeug, z.B. den Fahrzeug-Typ, sowie der Zeitpunkt und/oder die Position zu den Informationen jedes Arbeitspunktes A₁-A₄. Somit versteht sich von selbst, dass wenn der Arbeitspunkt A₁ in der Ego Trajektorie ausgewertet wird auch der jeweilige Arbeitspunkt A₁ des TPO1, TPO2 und TPO3 usw. ausgewertet wird.

Die geplante Trajektorie, hier der Spurwechsel, des Kraftfahrzeugs 4 ist ebenfalls anhand des geschwungen dargestellten Pfeils abgebildet. Im Rahmen des erfindungsgemäßen Verfahrens erfolgt nun zur Beurteilung der aktuellen Fahrsituation eine Berücksichtigung aller drei weiteren Verkehrsteilnehmer TPO1 - TPO3 sowie die Berücksichtigung fahrzeuginterner Informationen des Kraftfahrzeugs.

Ohne die domainspezifischen Heuristiken würden in jedem Arbeitspunkt A₁-A₄ (vgl. Fig. 4) alle Informationen und somit auch alle Informationen über die anderen Verkehrsteilnehmer TPO1 - TPO3 berücksichtigt werden, was zum einen zu einem komplexeren Problem und somit zum anderen zu einer Erhöhung des Planungs- und damit Rechenaufwandes führen würde.

Durch die Implementierung der domainspezifischen Heuristiken berücksichtigt nun das Kraftfahrzeug 4 bzw. der Trajektorien Planer 10 bei Beginn des Spurwechsels, also, wenn sich das Kraftfahrzeug noch auf seiner aktuellen, "alten", Fahrspur befindet, lediglich die Verkehrsteilnehmer, die sich ebenfalls auf dieser Fahrspur befinden, also lediglich den vorausfahrenden Verkehrsteilnehmer TPO 1. Die anderen Verkehrsteilnehmer TPO 2, TPO 3 und die Informationen über diese Verkehrsteilnehmer bleiben an diesen Arbeitspunkten A₁-A₄ (noch) unberücksichtigt. Sobald das Kraftfahrzeug 4 nun zumindest teilweise die Mittellinie überfahren hat, ermittelt der Trajektorien Planer 10 aufgrund der domainspezifischen Heuristiken und aus der Umgebung die Information, dass er an den nun folgenden Arbeitspunkten A₁-A₄ lediglich die Verkehrsteilnehmer bei der weiteren Planung berücksichtigen muss, die sich auf der "neuen" Fahrspur befinden, also hier die Verkehrsteilnehmer TPO2 und TPO3. Ob der andere

Verkehrsteilnehmer TPO1 nun bremst, beschleunigt, oder abbiegt, ist für die Planung der Trajektorie von nachrangiger Bedeutung.

Die zusätzlichen Informationen helfen somit dem Trajektorien Planer 10 bei der Vereinfachung des zu lösenden Problems durch eine Beseitigung von nicht relevanten Nebenbedingungen, sodass das Problem durch eine QP-Solver gelöst werden kann. Dies lässt sich zusammenfassend als Konvexifizierung des QP bezeichnen.

Zusammenfassend lässt sich also festhalten, dass die vorstehend beschriebene Herausforderung für die Trajektorienplanung als nichtlineares Optimierungsproblem formuliert werden kann. Physikalische und sicherheitsrelevante Grenzen können als Nebenbedingungen für dieses Problem formuliert werden. Das Ziel dieses Optimierungsproblems ist die Berechnung der Extrema (z.B. Minima) einer Zielfunktion (auch als Kostenfunktion bezeichnet).

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen.

## Patentansprüche

1. Verfahren zur Planung einer Trajektorie eines Fahrmanövers eines Kraftfahrzeugs (4), das Verfahren umfassend die Schritte:
1) Beurteilen (200) einer aktuellen Fahrsituation;
2) Ermitteln eines angepassten Fahrmanövers auf Basis der beurteilten Fahrsituation;
3) Berechnen einer Anzahl von Arbeitspunkten (A₁-A₄) der Trajektorie auf Basis der beurteilten Fahrsituation und des ermittelten Fahrmanövers;
4) Diskretisieren der aktuellen Umgebungsinformationen und/oder Fahrzeuginformationen an jedem der Arbeitspunkte (A₁-A₄) der Trajektorie;
5) Auswählen und Integrieren (300) relevanter Umgebungsdaten für jeden Arbeitspunkt (A₁-A₄) auf Basis domainspezifischer Informationen;
6) Linearisieren der ausgewählten und integrierten Umgebungsdaten;
7) Heranziehen der linearisierten Umgebungsdaten für die Formulierung eines QP-Modells;
8) Lösen (400) des QP-Modells mittels eines QP-Solvers;
9) Wiederholen (500) der Schritte 1) bis 8) in Abhängigkeit einer Konvergenz der Lösung, wobei bei der Wiederholung der Schritte 1) bis 8) die Lösung des QP-Solvers berücksichtigt wird.

2. Verfahren nach Anspruch 1, wobei als domainspezifische Information eine oder mehrere der nachstehenden Heuristiken ausgewählt aus:
- Bewertung der aktuellen Fahrsituation zur Erkennung geeigneter Manöver,
- Anpassung der Fahrzeugparameter auf Basis der bewerteten Fahrsituation;
- Auswahl oder Anpassung eines Fahrmodus und/oder eines Antriebsmodus des Kraftfahrzeugs (4);
herangezogen werden.

3. Verfahren nach Anspruch 2, wobei die Fahrzeugparameter auf Basis eines Fahrzeugmodells, insbesondere eines dynamischen Einspurmodells ermittelt werden.

4. Verfahren nach einem der vorhergehenden Ansprüche, wobei zur Ermittlung der relevanten Umgebungsdaten die jeweilige Relevanz anderer Verkehrsteilnehmer (TPO1, TPO2, TPO3, ..., TPOn) für das Fahrmanöver in einer Längsrichtung basierend auf einer geschätzten Position des Kraftfahrzeugs (4) herangezogen wird.

5. Verfahren nach einem der vorhergehenden Ansprüche, wobei zur Ermittlung der relevanten Umgebungsdaten die jeweilige Relevanz anderer Verkehrsteilnehmer (TPO1, TPO2, TPO3, ..., TPOn) für das Fahrmanöver in einer Querrichtung basierend auf einer geschätzten Position des Kraftfahrzeugs (4) herangezogen wird.

6. Verfahren nach einem der vorhergehenden Ansprüche, wobei zur Ermittlung der relevanten Umgebungsdaten ein für das Fahrmanöver verfügbarer Fahrbahnraum herangezogen wird.

7. Verfahren nach einem der vorhergehenden Ansprüche, ferner umfassend die Schritte:
- Heranziehen von Heuristiken zu Erkennung zumindest eines Objektes zwischen zwei Arbeitspunkten (A₁-A₄); und
- Modellieren und Hinzufügen des erkannten zumindest einen Objekts zu dem formulierten QP-Modell.

8. Verfahren nach einem der vorhergehenden Ansprüche, wobei fahrzeuginterne Entitäten des Kraftfahrzeugs und/oder fahrzeugexterne Entitäten für die Bereitstellung der aktuellen Fahrsituation und/oder der aktuellen Umgebungsinformationen herangezogen werden.

9. Verfahren nach einem der vorhergehenden Ansprüche, wobei die Planung der Trajektorie eine kombinierte Planung einer Longitudinal-Trajektorie und einer Lateral-Trajektorie umfasst.

10. Computerprogrammprodukt, umfassend Befehle, die bei der Ausführung des Programms durch einen Computer diesen veranlassen, das Verfahren nach einem der Ansprüche 1 bis 9 auszuführen.

11. Computerlesbares Speichermedium, umfassend Befehle, die bei der Ausführung durch einen Computer diesen veranlassen, die Schritte des Verfahrens nach einem der Ansprüche 1 bis 9 auszuführen.

12. Kraftfahrzeug, insbesondere autonom fahrendes Kraftfahrzeug, umfassend Mittel zur Ausführung des Verfahrens nach einem der Ansprüche 1 bis 9.

## Claims

1. Method for planning a trajectory of a driving manoeuvre of a motor vehicle (4), the method comprising the steps of:
1) assessing (200) a current driving situation;
2) determining an adapted driving manoeuvre based on the assessed driving situation;
3) calculating a number of working points (A₁-A₄) of the trajectory on the basis of the assessed driving situation and the determined driving manoeuvre;
4) discretizing the current environmental information and/or vehicle information at each of the working points (A₁-A₄) of the trajectory;
5) selecting and integrating (300) relevant environmental data for each working point (A₁-A₄) on the basis of domain-specific information;
6) linearizing the selected and integrated environmental data;
7) using the linearized environmental data to formulate a QP model;
8) solving (400) the QP model using a QP solver;
9) repeating (500) steps 1) to 8) on the basis of a convergence of the solution, wherein the solution from the QP solver is taken into account when repeating steps 1) to 8).

2. Method according to Claim 1, wherein one or more of the following heuristics selected from:
- assessment of the current driving situation in order to identify suitable manoeuvres,
- adaptation of the vehicle parameters based on the assessed driving situation;
- selection or adaptation of a driving mode and/or a drive mode of the motor vehicle (4);
are used as domain-specific information.

3. Method according to Claim 2, wherein the vehicle parameters are determined based on a
vehicle model, in particular a dynamic single-track model.

4. Method according to one of the preceding claims, wherein the respective relevance of other road users (TPO1, TPO2, TPO3, ..., TPOn) to the driving manoeuvre in a longitudinal direction based on an estimated position of the motor vehicle (4) is used to determine the relevant environmental data.

5. Method according to one of the preceding claims, wherein the respective relevance of other road users (TPO1, TPO2, TPO3, ..., TPOn) to the driving manoeuvre in a transverse direction based on an estimated position of the motor vehicle (4) is used to determine the relevant environmental data.

6. Method according to one of the preceding claims, wherein a road space available for the driving manoeuvre is used to determine the relevant environmental data.

7. Method according to one of the preceding claims, further comprising the steps of:
- using heuristics to detect at least one object between two working points (A₁-A₄); and
- modelling and adding the detected at least one object to the formulated QP model.

8. Method according to one of the preceding claims, wherein vehicle-internal entities of the motor vehicle and/or vehicle-external entities are used to provide the current driving situation and/or the current environmental information.

9. Method according to one of the preceding claims, wherein the planning of the trajectory comprises combined planning of a longitudinal trajectory and a lateral trajectory.

10. Computer program product comprising instructions which, when the program is executed by a computer, cause the computer to carry out the method according to one of Claims 1 to 9.

11. Computer-readable storage medium comprising instructions which, when executed by a computer, cause the computer to carry out the steps of the method according to one of Claims 1 to 9.

12. Motor vehicle, in particular autonomously driving motor vehicle, comprising means for carrying out the method according to one of Claims 1 to 9.

## Revendications

1. Procédé de planification d'une trajectoire d'une manœuvre de conduite d'un véhicule à moteur (4), le procédé comprenant les étapes consistant à :
1 évaluer (200) une situation de conduite actuelle ;
2) déterminer une manœuvre de conduite adaptée sur la base de la situation de conduite évaluée ;
3 calculer un nombre de points de travail (A₁-A₄) de trajectoire sur la base de la situation de conduite évaluée et de la manœuvre déterminée ;
4) discrétiser les informations d'environnement et/ou les informations de véhicule actuelles au niveau de chacun des points de travail (A₁-A₄) de la trajectoire ;
5) sélectionner et intégrer (300) des données d'environnement pertinentes pour chaque point de travail (A₁-A₄) sur la base d'informations spécifiques à un domaine ;
6) linéariser les données d'environnement sélectionnées et intégrées ;
7) utiliser les données d'environnement linéarisées pour la formulation d'un modèle QP ;
8) résoudre (400) le modèle QP à l'aide d'un résolveur QP ;
9) répéter (500) les étapes 1) à 8) en fonction d'une convergence de la solution, lors de la répétition des étapes 1) à 8), la solution du résolveur de QP étant prise en considération.

2. Procédé selon la revendication 1, dans lequel une ou plusieurs des heuristiques suivantes sélectionnées en tant qu'information spécifique à un domaine :
- évaluation de la situation de conduite actuelle pour détecter les manœuvres appropriées,
- adaptation des paramètres du véhicule en fonction de la situation de conduite évaluée ;
- sélection ou adaptation d'un mode de conduite et/ou d'un mode de propulsion du véhicule à moteur (4).
sont prises en considération.

3. Procédé selon la revendication 2, dans lequel les paramètres du véhicule sont basés sur un
modèle de véhicule, en particulier un modèle dynamique à voie unique.

4. Procédé selon l'une des revendications précédentes, dans lequel, pour déterminer les données d'environnement pertinentes, la pertinence respective d'autres usagers de la route (TPO1, TPO2, TPO3, ..., TPOn) pour la manœuvre de conduite dans une direction longitudinale est prise en considération sur la base d'une position estimée du véhicule à moteur (4).

5. Procédé selon l'une des revendications précédentes, dans lequel, pour déterminer les données d'environnement pertinentes, la pertinence respective d'autres usagers de la route (TPO1, TPO2, TPO3, ..., TPOn) pour la manœuvre de conduite dans une direction transversale est prise en considération sur la base d'une position estimée du véhicule à moteur (4).

6. Procédé selon l'une des revendications précédentes, dans lequel, pour déterminer les données d'environnement pertinentes, un espace de chaussée disponible pour la manœuvre de conduite est pris en considération.

7. Procédé selon l'une des revendications précédentes, comprenant en outre les étapes consistant à :
- utiliser des heuristiques pour détecter au moins un objet entre deux points de travail (A₁-A₄) ; et
- modéliser et ajouter au moins un objet détecté au modèle QP formulé.

8. Procédé selon l'une des revendications précédentes, dans lequel des entités internes au véhicule à moteur et/ou des entités externes au véhicule sont prises en considération pour la fourniture de la situation de conduite actuelle et/ou des informations d'environnement actuelles.

9. Procédé selon l'une des revendications précédentes, dans lequel la planification de la trajectoire implique une planification combinée d'une trajectoire longitudinale et d'une trajectoire latérale.

10. Produit de programme d'ordinateur, comprenant des instructions qui, lors de l'exécution du programme par un ordinateur, le conduisent à mettre en œuvre le procédé selon l'une des revendications 1 à 9.

11. Support de stockage lisible par ordinateur, comprenant des instructions qui, lors de leur exécution par un ordinateur, le conduisent à exécuter les étapes du procédé selon l'une des revendications 1 à 9.

12. Véhicule à moteur, en particulier véhicule à moteur autonome, comprenant des moyens permettant la mise en œuvre du procédé selon l'une des revendications 1 à 9.
